# EUROPEAN PATENT APPLICATION

(11) **EP 4 268 667 A1**
(43) Date of publication of application: **01.11.2023**
(21) Application number: 22198931.2
(22) Date of filing: 30.09.2022
(51) Int. Cl.: A46B 15/00, A61C 17/22

(54) **ORAL CARE APPARATUS**

(30) Priority: 29.04.2022 US 202263336407 P
(71) Applicant: Koninklijke Philips N.V., 5656 AG Eindhoven (NL)
(72) Inventor: BEREZHNYY, Igor, Eindhoven (NL); JUAREZ URIZAR, Oscar Ricardo, Eindhoven (NL)
(74) Representative: Philips Intellectual Property & Standards

(57) **Abstract**

Proposed are schemes, solutions, concepts, designs, methods and systems pertaining to aiding and/or improving oral care apparatus having cleaning elements that are adapted, in use, to engage dental tissue of the user. Embodiments propose that, based on light reflected from a surface of the oral cavity during use, an indication of positioning with respect to a tooth surface or gum tissue of the user may be determined. That is, it may be determined whether a cleaning element is positioned at a tooth surface or gum tissue of the user by analyzing light reflected from a surface of the oral cavity.

## Description

### FIELD OF THE INVENTION

The present invention relates to the field of oral care devices, and in particular to the field of oral care apparatus that have cleaning elements for engagement with dental tissue of the user,

### BACKGROUND OF THE INVENTION

Oral care apparatus, such as toothbrushes and mouthpiece-style dental brushes, are used on a regular (e.g. daily) basis.

It is common for such personal care devices to have cleaning elements (e.g. bristles, tufts, elongated projections and the like) which are configured for engagement with dental tissue of the user during use.

Based on studies, positioning of the cleaning elements in a user's oral cavity during use is expected to affect long term results. For example, there are recognized problems with mouthpiece-style dental brushes (such as "U-shaped" or "Y-shaped" brushes), arising partly from poor alignment between the cleaning elements (e.g. bristles) and the user's teeth.

### SUMMARY OF THE INVENTION

The invention is defined by the claims.

According to examples in accordance with an aspect of the invention, there is provided an oral care apparatus for cleaning teeth of a user, the apparatus comprising:
a light source configured to illuminate the oral cavity of the user with light;
a light sensor unit configured to detect light;
a plurality of cleaning elements for engagement with dental tissue of the user, wherein the plurality of cleaning elements comprises a first optical waveguide configured, in use, to receive light reflected from a surface of the oral cavity illuminated by the light source and to transmit the received light to the light sensor unit;
a light analysis unit configured to analyze detected light transmitted to the light sensor unit via the first optical waveguide to obtain an analysis result; and
a processor configured to determine a first indication of whether the first optical waveguide is positioned at a tooth surface or gum tissue of the user based on the analysis result.

Proposed concepts thus aim to provide schemes, solutions, concepts, designs, methods and systems pertaining to aiding and/or improving oral care apparatus having cleaning elements that are adapted, in use, to engage dental tissue of the user.

In particular, it is proposed that, based on light reflected from a surface of the oral cavity during use, an indication of positioning with respect to a tooth surface or gum tissue of the user may be determined. That is, it may be determined whether a cleaning element is positioned at a tooth surface or gum tissue of the user by analyzing light reflected from a surface of the oral cavity. Determining a position of cleaning elements (in real-time) may provide a variety of benefits, such as user guidance/feedback which may suggest that the user alters position of the cleaning element(s) to achieve improved cleaning of their teeth.

Embodiments may be based on a realization that one or more properties of light reflected from a surface of the oral cavity may differ depending on whether it was reflected from a tooth surface or gum tissue. In particular, it is proposed that a wavelength spectrum of reflected light will differ according to whether the light was reflected by a tooth surface or a gum tissue. For instance, white light incident on a tooth surface may be reflected as substantially white light, whereas white light incident on gum tissue may be reflected as substantially red light. This may be leveraged by adapting one or more cleaning elements (e.g. bristles or projections) to be light conductors which are configured, in use, to receive light reflected from a surface of the oral cavity and to transmit the received light to a light sensor unit. By analyzing the reflected light received by a light conducting cleaning element, it may be determined whether the cleaning element is positioned at a tooth surface or the gum tissue of the user (e.g. by analyzing if the wavelength spectrum indicates absorption of light by gum tissue).

By way of example of the proposed concept(s), a toothbrush or mouthpiece may be provided with light conducting cleaning elements (e.g. optical waveguides formed as bristles, such as optical fibres). The light conducting cleaning elements may then receive light reflected from the oral cavity of user and guide the received light to a light sensor unit. Through spectral analysis of the received light, for example, it may be determined if the light conducting cleaning elements received light reflected from a tooth surface or gum tissue of the user, which, in turn, may be used to determine whether the light conducting cleaning elements are positioned at a tooth surface or gum tissue of the user based. Further, by arranging the light conducting cleaning elements in a predetermined or known pattern across a support surface of the oral care apparatus, analysis of the reflected light received by each of the conducting cleaning elements may be combined with knowledge of the predetermined or known pattern of light conducting cleaning elements to determine how many (and/or which) of the light conducting cleaning elements are overlapping a tooth surface or gum tissue of the user. An accurate understanding of cleaning element positioning relative to a user's tooth surface or gum tissue may therefore be facilitated by proposed embodiments.

In other words, embodiments propose to illuminate the oral cavity of the user with light and to then use or more optical waveguides amongst the cleaning elements to capture light reflected from a surface of the oral cavity. Analysis of the captured light may then provide an indication of the positon of the cleaning elements in relation to a tooth surface or gum tissue of the user. Such analysis may be based on spectral properties (e.g. wavelength variation) of the reflected light received by the optical waveguide(s).

Embodiments may thus provide the benefit of identifying, in real-time, a position of the cleaning element(s) during use. This may enable a variety of useful applications, such as a user guidance application that suggests user movement directions during brushing for example.

A determined indication of the positon of the cleaning elements may be used to control an operation of the oral care apparatus and/or a provide guidance to the user. Embodiments may therefore facilitate improved cleaning during use and/or reduce unwanted gum tissue damage.

Embodiments may be particularly relevant to dentistry propositions, for example, by enabling improved cleaning of a user's tooth, gum, tongue, etc. For instance, proposed embodiments may aid improved dental care. Accordingly, embodiments may be used in relation to dental treatment so as to support a dental care professional when providing treatment for a subject.

By being integrated into the normal brushing regimen of a user, embodiments may support improved dental care. Improved dental cleaning may therefore be provided by proposed concepts.

It has been realized that by employing optical waveguides amongst the cleaning element to capture light reflected from a surface of the oral cavity of a user, a positioning of the cleaning element with respect to a tooth surface or gum tissue of the user may be inferred from analysis captured reflected light.

Embodiments may therefore provide the advantage that real time information about cleaning element position may be acquired through the use of relatively simple light detection and analysis concepts.

In some embodiments, the plurality of cleaning elements comprises a second optical waveguide spaced apart from the first optical waveguide and configured, in use, to receive light reflected from a surface of the oral cavity illuminated by the light source and to transmit the received light to the light sensor unit. The light analysis unit may then be further configured to analyze detected light transmitted to the light sensor unit via the second optical waveguide to obtain an second analysis result, the processor may then be further configured to determine a second indication of whether the second optical waveguide is positioned at a tooth surface or the gum tissue of the user based on the second analysis result. In this way, light reflected from a surface of the oral cavity may be received via multiple optical waveguides provided at different positions, thus enabling multiple indications of position to be acquired. Simple position sensing techniques and/or apparatus may therefore be employed at multiple different locations of the oral care apparatus to accurately identify a position and/or orientation of the apparatus during use.

In some exemplary embodiments, the processor may be further configured to identify a surface of the user engaged by the plurality of cleaning elements based on the first and second indications. That is, the apparatus may be configured, in use, to identify a surface of the user engaged by one or more of the cleaning elements based on the determined indications. Embodiments may therefore facilitate the provision of information indicating which cleaning elements are in contact with a tooth surface and which cleaning elements are in contact with gum tissues. This may, for example, enable the user and/or apparatus to compensate for poor alignment between generically-arranged cleaning elements and a user's unique anatomy.

The light sensor unit may comprises first and second light sensors, and the first and second optical waveguides may be configured, in use, to transmit the received light to the first and second light sensors, respectively. Respective lights sensors may be employed for each of the optical waveguides, thus enabling individual detection of light received by each optical waveguide. Improved accuracy of may thus be achieved via the use of more light sensors

In some embodiments, the light analysis unit may be configured to analyze the wavelength spectrum of detected light transmitted to the light sensor unit so as to obtain an analysis result. For instance, a change in colour of light resulting from reflection by an oral surface may be analyzed to determine a nature/type of the oral surface, wherein a red-shift in reflected light may infer that that the light was reflected by gum tissue for example. Accurate determination of optical waveguide position (and thus associated cleaning element position(s)) may therefore be enabled by relatively simple analysis of detected light properties.

In an embodiment, the plurality of cleaning elements may comprise one or more illumination optical waveguides each configured, in use, to receive light from the light source to transmit the received light from the light source towards a surface of the oral cavity for illuminating the surface of the oral cavity. In this way, some embodiments may include light conducting cleaning elements which are configured to direct light from the light source to a surface of the oral cavity. That is, one or more of the cleaning elements may be configured to illuminate the oral cavity (by being adapted to guide light from the light source). Cleaning elements may therefore serve multiple purposes, e.g. dental cleaning and illumination of surfaces of the oral cavity.

By way of further example, the light sensor unit may comprise an array of light sensors. The plurality of cleaning elements may then comprise an array of optical waveguides each configured, in use, to receive light reflected from a surface of the oral cavity illuminated by the light source and to transmit the received light to a respective light sensor of the array of light sensors, and the light analysis unit may be configured to analyze the detected light transmitted to the array of light sensors via the array of optical waveguides to obtain an array analysis result, The processor may then determine, for each optical waveguide of the array of optical waveguide, a respective indication of whether the optical waveguide is positioned at a tooth surface or the gum tissue of the user based on the array analysis result. For instance, the light sensor may comprise a matrix arrangement of the light sensors, and the cleaning elements may comprise a matric arrangement of optical waveguides each configured. The light sensors may then be are arranged to coincide (positionally) with the respective optical waveguides, so that each waveguide is arranged to transmit received light to a respective light sensor. In this way, reflected light received by each optical waveguide may individually sensed (by a respective light sensor) and analyzed, thus enabling an indication of position for each waveguide to be determined. A spatial distribution of waveguide positions may thus be obtained, facilitating an understanding of gum/tooth overlap of the matrix of the optical waveguides. For instance, the processor may also be further configured to determine an indication of overlapping of the user's gum tissue by the plurality of cleaning elements based on the array analysis result.

Further, the plurality of cleaning elements may comprise an array of illumination optical waveguides configured, in use, to receive light from the light source to transmit the received light from the light source towards a surface of the oral cavity for illuminating the surface of the oral cavity. For instance, the array of illumination optical waveguides may be positioned adjacent to or interspaced with the array of optical waveguides. In this way, the cleaning elements may be provided with first and second sub-arrays of optical waveguides, with a first sub-array being adapted to transmit light from the light source towards a surface of the oral cavity (e.g. for illuminating the oral cavity), and with the second sub-array being adapted to receive light reflected from the surface of the oral cavity. Thus, in addition to providing a dental cleansing function, cleaning elements of the apparatus may also provide the functionality of illuminating the oral cavity with light and receiving light reflected from the oral cavity. Embodiments may thus be implemented with reduced/fewer components.

Some embodiments may further comprise an output interface configured to output a control signal based on an indication determined by processor. The control signal may, for example, comprise an audible, visual and/or haptic signal for guiding usage of the apparatus by the user. Embodiments may therefore aid a user in achieving improved or optimal positioning of the cleaning elements. This may also assist a user in cleaning complex areas (e.g. around braces), e.g. by providing signals indicating a degree of tooth surface being engaged by the cleaning elements. Other advanced functions, such as localized deposition of cleaning paste or localized sampling of bacteria from the user's tissue, may be facilitated by such embodiments.

The oral care apparatus may be integrated (or incorporated) with a toothbrush or a mouthpiece. Thus, the proposed concept(s) may provide a toothbrush comprising oral care apparatus according to a proposed embodiment. Also, there may be provide a mouthpiece comprising oral care apparatus according to a proposed embodiment. One or more proposed concept(s) may therefore be employed in a range of different oral care devices. Embodiments may therefore have wide application in the field of oral care devices.

According to another aspect of the invention, there is provided a method for controlling an oral care apparatus, wherein the oral care apparatus comprises: a light source configured to illuminate the oral cavity of a user with light; a light sensor unit configured to detect light; and a plurality of cleaning elements for engagement with dental tissue of the user, wherein the plurality of cleaning elements comprises an optical waveguide, the method comprising:
receiving, at the optical waveguide, light reflected from a surface of the oral cavity illuminated by the light source;
transmitting the received light to the light sensor unit via the optical waveguide;
analyzing detected light transmitted to the light sensor unit via the optical waveguide to obtain an analysis result; and
determining an indication of whether the optical waveguide is positioned at a tooth surface or the gum tissue of the user based on the analysis result.

According to yet another aspect of the invention, there is provided a computer program comprising computer program code means which is adapted, when said computer program is run on a computer, to implement a method according to proposed embodiment.

Thus, there may also be provided a computer system comprising: a computer program product according to proposed embodiment; and one or more processors adapted to perform a method according to a proposed concept by execution of the computer-readable program code of said computer program product.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1A is a simplified schematic diagram of an oral care apparatus according to a proposed embodiment;
Figure 1B is a close-up view of the brush head of the oral care apparatus of Figure 1A in use (wherein the reflection of light incident on a surface of the oral cavity is illustrated);
Figure 2 depicts a modification to the embodiment of Figures 1A & 1B;
Figure 3 illustrates a modification to the embodiment of Figure 2, wherein two illumination optical waveguides are provided within the cleaning elements;
Figure 4 illustrates an embodiment which employs a matrix arrangement of optical waveguides and illumination optical waveguides;
Figure 5 is a simplified flow diagram of a method for controlling an oral care apparatus according to an embodiment; and
Figure 6 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding and/or improving cleaning from oral care apparatus. In particular, embodiments may provide a system, device and/or method which provides an indication of positioning with respect to a tooth surface or gum tissue of the user. This may enable adjust usage, orientation and/or positioning of cleaning elements of the apparatus according to its position status, which may, for example enhance cleaning functions or outcomes.

The proposed concepts may, for example, be applied to toothbrushes and mouthpiece-style toothbrushes (which may have particular problems of bristle alignment).

Embodiments may therefore facilitate extended and/or improve cleaning functionality oral care devices. Such embodiments may be particularly relevant to teledentistry propositions, for example, by enabling the determination and/or control of positioning of cleaning elements according to usage. For instance, based on light reflected from a surface of the oral cavity in use, an indication of cleaning element positioning with respect to a tooth surface or gum tissue of the user may be determined. This indication may, in turn, facilitate improved control and/or positioning of the cleaning element.

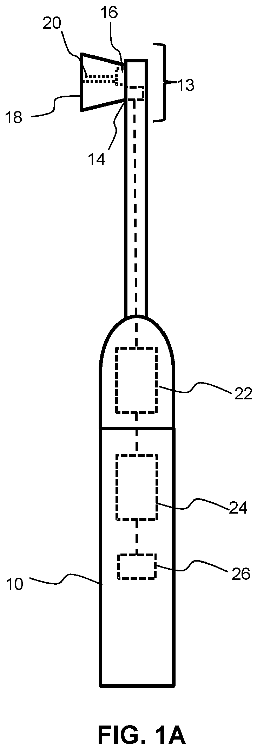

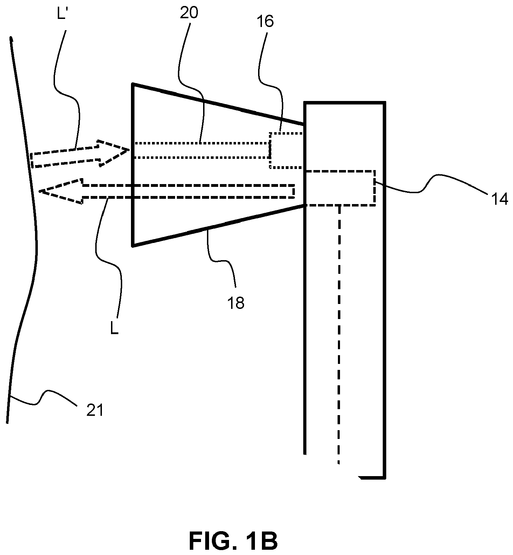

Referring to Figures 1A and 1B, there is shown an oral care apparatus according to a proposed embodiment. More specifically, Figure 1A is a simplified schematic diagram of an oral care apparatus according to a proposed embodiment, and Figure 1B is a close-up view of the brush head of the oral care apparatus of Figure 1A in use (wherein the reflection of light incident on a surface of the oral cavity is illustrated). In this embodiment, the oral care apparatus comprises an electric toothbrush 10 for cleaning teeth of a user.

The electric toothbrush 10 comprises a brush head 13 supporting a light source 14, a light sensor unit 16 and a plurality of cleaning elements 18 (e.g. flexible bristles) for engagement with dental tissue of the user.

The light source (e.g. LED) 14 is configured, in use, to illuminate the oral cavity of the user with white light (L). In other embodiments, however, the light source may emit other forms of light, such as visible light or light of a predetermined colour.

The light sensor 16 is positioned in amongst the cleaning elements 18 (i.e. within the outer perimeter of the cleaning elements 18) and configured to detect light.

The plurality of cleaning elements (e.g. flexible bristles) 18 are configured, in use, for engagement with dental tissue (i.e. an oral surface) of the user.

The plurality of cleaning elements 18 comprises an optical waveguide 20 (e.g. an optical fiber or fiber optic element) that is configured, in use, to receive light L' reflected from a surface 21 of the oral cavity (illuminated by the light source 14) and to transmit the received light to the light sensor unit 16. That is, the optical waveguide 20 is adapted to receive light that is incident on a first, oral surface contacting end of the waveguide and guide the received light along its longitudinal length to the other, opposite end of the waveguide (adjacent the light sensor unit 16).

The toothbrush further comprises a light analysis unit 22 that is configured to analyze detected light transmitted to the light sensor unit 16 via the optical waveguide 20 to obtain an analysis result. Light received via the optical waveguide 20 and incident on the light sensor unit 16, i.e. detected light, is thus passed to the light analysis unit 22 for analysis. Specifically, the light analysis unit 22 is configured to analyze the wavelength spectrum of detected light so as to obtain an analysis result.

Leveraging the proposal that properties of light reflected from a surface of the oral cavity may differ depending on whether it was reflected from a tooth surface or gum tissue, the light sensor unit 16 analyses the wavelength spectrum of detected light to determine if the detected light is substantially white light or substantially red light. The analysis result generated by the analysis unit 22 thus comprises information about the wavelength spectrum of the detected light (e.g. an indication of whether the detected light is white or red in colour).

The toothbrush 10 also comprises a processor 24 that is configured to determine an indication of whether the optical waveguide 20 is positioned at a tooth surface or gum tissue of the user based on the analysis result. Specifically, the processor 24 generates an indication that the cleaning elements are positioned at a tooth surface if the analysis result comprises information identifying that the detected light is substantially white in colour). Conversely, the processor 24 generates an indication that the cleaning elements are positioned at gum tissue if the analysis result comprises information identifying that that detected light is substantially red in colour.

The toothbrush 10 further comprises an output interface 26 that is configured to output a control signal based on the indication determined by processor 24. Here, the output interface comprises a speaker that is configured to output/emit an audible signal (e.g. beep, high-pitched sound, etc.) responsive to an indication that the cleaning elements are positioned at gum tissue of the user. In this way, the output interface is configured to provide a warning signal to the user that the cleaning elements are engaging gum tissue (rather than a tooth surface), thus assisting the user to adjust/adapt the positioning of the cleaning elements during use.

Although the output interface 26 of this embodiment is detailed as providing an audible signal, the output interface 26 may be configured to output control signals in different user-perceivable forms in other embodiments. For instance, an output interface of an alternative embodiment may be configured to output a visual signal (e.g. display a graphical element) or a haptic signal (e.g. vibratory signal of varying frequency depending on the indication determined by the processor).

Although the embodiment of Figures 1A & 1B employs a concept of employing a single optical waveguide (for receiving light reflected from a surface of the oral cavity illuminated by the light source), alternative embodiments may employ a plurality of optical waveguides within the cleaning elements. A larger/greater number of optical waveguides may, for example, enable the identification of the position of different parts/regions of the cleaning elements. Simple analysis of light received in each the different optical waveguides to determine whether each optical waveguide is positioned at a tooth surface or gum tissue may therefore be employed, thus enabling determination of a degree of overlap of gum tissue by the cleaning elements for example.

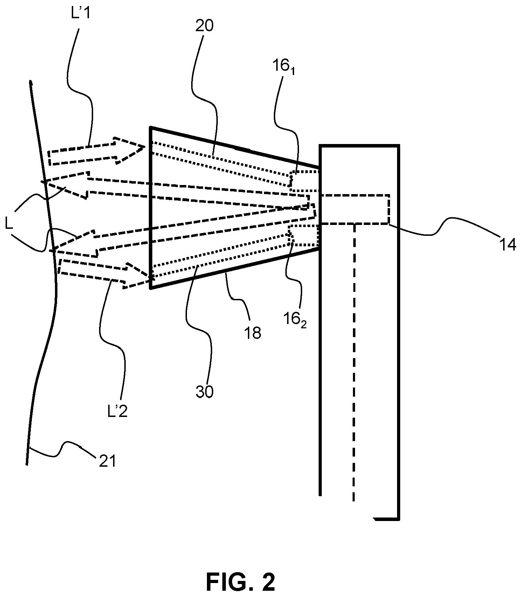

Simply by way of example, a modified version of the embodiment of Figures 1A and 1B is depicted in Figure 2. In the embodiment of Figure 2, the toothbrush 100 further comprises a second optical waveguide 30 spaced apart from the (first) optical waveguide 20.

More specifically, in the embodiment of Figure 2, the plurality of cleaning elements comprises a second optical waveguide 30 spaced apart from the first optical waveguide 20. Also, the light sensor comprises first 16₁ and second 16₂ light sensors.

The first 20 and second 30 optical waveguides are situated on opposite edges of the group of cleaning elements 18. The first optical waveguide 20 is positioned neighboring the top/upper edge of the group of cleaning elements 18. The first optical waveguide 20 is positioned neighboring the bottom/lower edge of the group of cleaning elements 18. The first 20 and second 30 optical waveguides are thus diametrically opposed in the generally-circular cross-sectional group of cleaning elements 18.

The first optical waveguide 20 is configured, in use, to receive light L'1 reflected from a surface 21 of the oral cavity illuminated by the light source 14 and to transmit the received light L'1 to the first light sensor unit 16₁. Similarly, the second optical waveguide 30 is configured, in use, to receive light L'2 reflected from a surface 21 of the oral cavity illuminated by the light source 14 and to transmit the received light L'2 to the second light sensor unit 16₂. That is, the first 20 and second 30 optical waveguides are configured, in use, to transmit the received light to the first 16₁ and second 16₂ light sensors, respectively.

The light analysis unit 14 is further configured to analyze detected light transmitted to the first 16₁ and second 16₂ light sensor units via the first 20 and 30 second optical waveguides, respectively, so as to obtain first and second analysis results.

The processor 24 is further configured to determine a second indication of whether the second optical waveguide is positioned at a tooth surface or the gum tissue of the user based on the second analysis result. This is therefore similar to the embodiment of Figures 1A & 1B, but the processors determines an indication of position for each of the two optical waveguides. The first and second indications may therefore differ is either of the optical waveguides at positioned at a tooth surface of the user whilst the other optical waveguide is positioned at gum tissue (e.g. when the group of cleaning elements is overlapping a tooth-gum boundary).

Based on the first and second indications, the processor 24 is further configured to identify a surface of the user engaged by the plurality of cleaning elements. For example, if both the first and second and second indications indicate that the respective optical waveguides are positioned at a tooth surface, the processor determines that the plurality of cleaning elements are positioned at a tooth surface of the user (and thus not overlapping gum tissue). Conversely, if both the first and second and second indications indicate that the respective optical waveguides are positioned at gum tissue, the processor determines that the plurality of cleaning elements are positioned at gum tissue of the user (and thus not overlapping a tooth surface).

An output signal may be provided by the output interface 26 based on the surface identified by the processor 24. For example, a warning signal may be output to the user, responsive to the identified surface being gum tissue. This may instruct the user to adjust/adapt the positioning of the cleaning elements during use, and thus help to reduce/avoid gum tissue damage.

Although the above-described embodiments of Figures 1A, 1B and 2 employ a light source that configured to illuminate the oral cavity of the user by emitting light through the group of cleaning elements, alternative embodiments may employ one or more illumination optical waveguides within the cleaning elements. The one or more illumination optical waveguide may be configured to receive (at a first end adjacent the light source) light from the light source and to transmit the received light from the light source to a second, opposite end out towards a surface of the oral cavity. In this way, the one or more illumination optical waveguides may improve/increase illumination of the oral cavity by avoiding/reducing an amount of light from the light source that is blocked, reflected or otherwise prevented from being emitted from the group of cleaning elements towards the oral cavity of the user.

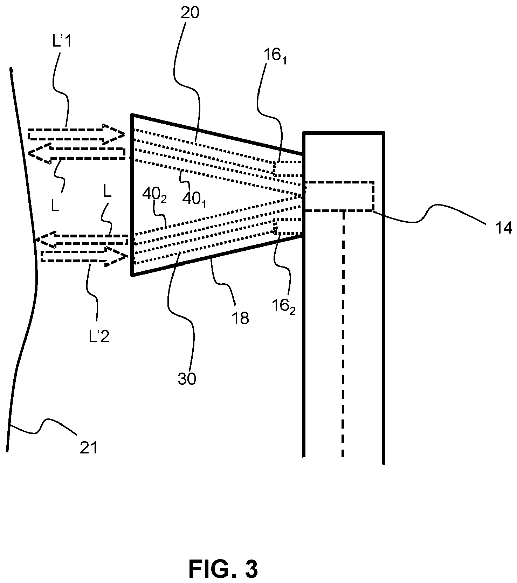

By way of example, Figure 3 illustrates a modification to the embodiment of Figure 2, wherein two illumination optical waveguides are provided within the cleaning elements.

More specifically, in the embodiment of Figure 3, the plurality of cleaning elements comprises two illumination optical waveguides each configured, in use, to receive light from the light source 14 and to transmit the received light from the light source towards a surface 21 of the oral cavity for illuminating the surface of the oral cavity.

The first illumination optical waveguide 40₁ is provided adjacent and substantially parallel to the first optical waveguide 20. The first illumination optical waveguide 40₁ is configured, in use, to transmit light L received from the light source 14 towards a surface 21 of the oral cavity.

The second illumination optical waveguide 40₂ is provided adjacent and substantially parallel to the second optical waveguide 30. The second illumination optical waveguide 40₂ is also configured, in use, to transmit light L received from the light source 14 towards a surface 21 of the oral cavity.

The first 40₁ and second 40₂ illumination optical waveguides may improve (i.e. increase) illumination of the oral cavity by increasing an amount of light emitted through the group of cleaning elements 18 and/or alleviate requirements placed on the light source (thus assisting its integration within the toothbrush for example).

In yet further embodiments, an array of optical waveguides (for receiving reflected light) and/or an array of illumination optical waveguides (for transmitting received light from the light source towards a surface of the oral cavity) may be employed. Such an array may comprise a 1D (e.g. linear) arrangement of waveguides or a 2D (e.g. matric arrangement) of waveguides. Where two arrays/matrixes are employed, they may be positioned so that they are adjacent to each other or interspaced with each other.

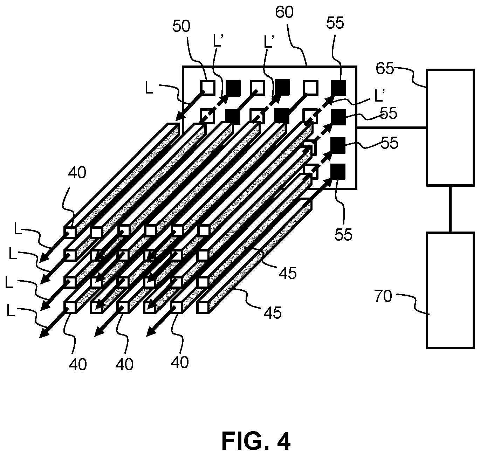

Simply by way of example, Figure 4 illustrates an embodiment which employs a matrix arrangement of optical waveguides 40 (for receiving reflected light L') and illumination optical waveguides 45 (for transmitting received light L from the light source 50 towards a surface of the oral cavity. The embodiment also employs a matrix arrangement of light sources 50 (e.g. LEDs) (shown as white squares) and light sensors 55 (shown as black squares) supported on the surface of a substantially planer substrate 60.

More specifically, the light sensor unit comprises an matrix arrangement of light sensors 55, and the light source comprises a matrix arrangement of LEDs 50. The light sensors 55 and the LEDs are interspaced with each other so as to form a combined matrix having alternating columns of light sensors 55 and LEDs 50.

Also, the plurality of cleaning elements comprises a matrix arrangement of optical waveguides 40 each configured, in use, to receive light L' reflected from a surface of the oral cavity illuminated by the LEDs 50 and to transmit the received light L' to a respective light sensor 55. The plurality of cleaning elements also comprises a matrix arrangement of illumination optical waveguides 45 each configured, in use, to receive light L from a respective LED 50 and to transmit the received light L towards a surface of the oral cavity for illuminating the surface of the oral cavity.

The optical waveguides 40 and illumination optical waveguides 45 are interspaced with each other so as to form a combined matrix having alternating columns of optical waveguides 40 and illumination optical waveguides 45.

The optical waveguides 40 are aligned with the light sensors 55, and the illumination optical waveguides 45 are aligned with the LEDs. In this way, each optical waveguides 40 is associated with (i.e. corresponds to) a single, respective light sensor 55. Similarly, each illumination optical waveguide 45 is associated with (i.e. corresponds to) a single, respective LED 50.

The oral care apparatus also comprises a light analysis unit 65 that is configured to analyze light detected by each of the light sensors 55 to obtain an analysis result. Light received via the optical waveguides 40 and incident on the light sensors 55, i.e. detected light, is thus passed to the light analysis unit 65 for analysis. Specifically, the light analysis unit 65 is configured to analyze the wavelength spectrum of detected light at each light sensor 55 so as to obtain an array analysis result.

The oral care apparatus yet further comprises a processor 70 that is configured to determine, for each optical waveguide 40 of the array of optical waveguides, a respective indication of whether the optical waveguide 40 is positioned at a tooth surface or the gum tissue of the user based on the array analysis result. The processor also determines an indication of overlapping of the user's gum tissue by the plurality of cleaning elements based on the array analysis result.

Although embodiments have been described above as determining cleaning element position is either at a tooth surface or gum tissue based on detected white reflected light or red reflected light, respective light, the proposed concepts are not limited to detecting red or white light. Other embodiments may, for example, analysis a shift or change in the spectrum of reflected light. A shift in the wavelength spectrum may then be used to infer whether the light was reflected by tooth surface or gum tissue. For instance, where a shift/change in the spectrum of light (resulting from reflection by an oral surface) is small or negligible, it may be inferred that the light was reflected by tooth surface. Alternatively, low absorption of light (e.g. a small/low change in light intensity resulting from reflection by an oral surface) may indicate that the light was reflected by a tooth surface, whereas high absorption of light (e.g. a large/high change in light intensity resulting from reflection by an oral surface) may indicate that the light was reflected by gum tissue. Analysis of one or more or a range of different characteristics of light reflected by an oral surface of a user may thus be employed by proposed embodiments to determine position with respect to a tooth surface or gum tissue of the user.

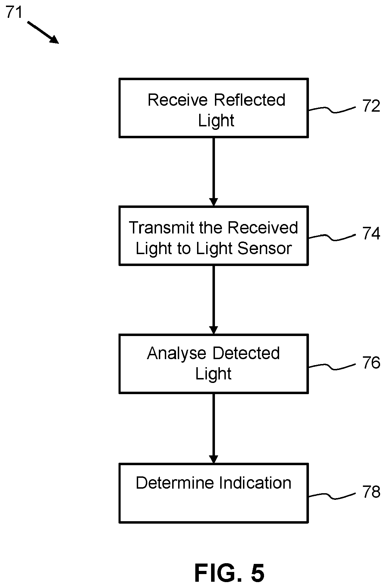

Referring now to Figure 5, there is depicted a simplified flow diagram of a method 71 for controlling an oral care apparatus according to an embodiment of the invention. In this example, the personal care device is a mouthpiece for insertion into a user's oral cavity. The mouthpiece comprises: a light source configured to illuminate the oral cavity of a user with light; a light sensor unit configured to detect light; and a plurality of cleaning elements for engagement with dental tissue of the user. Further, the plurality of cleaning elements comprises an optical waveguide.

The method comprises a first step of receiving 72, at the optical waveguide, light reflected from a surface of the oral cavity illuminated by the light source. The method then proceeds to the step of transmitting 74 the received light to the light sensor unit via the optical waveguide. Next, in step 76, the detected light transmitted to the light sensor unit via the optical waveguide is analyzed to obtain an analysis result.

Finally, in step 78, an indication of whether the optical waveguide is positioned at a tooth surface or the gum tissue of the user is determined based on the analysis result (from step 76).

It is to be understood that many addition embodiments of the proposed concept(s) are foresee, e.g. through modification of the above-described embodiments.

By way of example, modifications may relate to the type(s) of optical waveguide(s) included within the cleaning elements. For instance, an optical waveguide may comprise an optical fibre or flexible optical cable/fibre that also acts a cleaning element (e.g. engages an oral surface in a similar manner as a bristle. Alternatively, an optical waveguide provided within a tuft/group of bristles and recessed (i.e. set back) from a cleaning surface of the tuft/group of bristles, such that it is protected from engaging an oral surface in use. This may be preferable when the optical waveguide is formed from a material that is not suitable for contacting an oral surface during use of the oral care apparatus.

Also, the proposed concept(s) may be applicable to many different forms of oral care apparatus that have cleaning elements designed to engage with dental tissue of a user, such a manual toothbrushes, vibratory toothbrushes, cleaning-mouthpieces, and the like. Furthermore, embodiments may be added (e.g. retro-fitted) to conventional/existing oral care apparatus, so as to add or extend functionality. For instance oral care apparatus according to an embodiment may simply comprise bristles made of light conductors, wherein the bristles are inserted into a matrix made of RGB light emitting and RGB light sensing diodes. An algorithm for processing signals coming from light sensing diodes of the matrix may then be employed in order to sort them out by colours (where, in in general, detected red light indicates gum areas and white light indicates teeth).

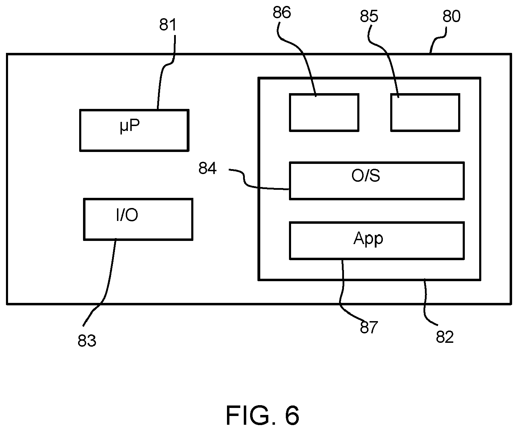

Figure 6 illustrates an example of a computer 80 within which one or more parts of an embodiment may be employed. Various operations discussed above may utilize the capabilities of the computer 80. For example, one or more parts of an oral care apparatus for cleaning teeth of a user may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 80 includes, but is not limited to, PCs, workstations, laptops, PDAs, palm devices, servers, storages, and the like. Generally, in terms of hardware architecture, the computer 80 may include one or more processors 81, memory 82, and one or more I/O devices 83 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 81 is a hardware device for executing software that can be stored in the memory 82. The processor 81 can be virtually any custom made or commercially available processor, a central processing unit (CPU), a digital signal processor (DSP), or an auxiliary processor among several processors associated with the computer 80, and the processor 81 may be a semiconductor based microprocessor (in the form of a microchip) or a microprocessor.

The memory 82 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 82 may incorporate electronic, magnetic, optical, and/or other types of storage media. Note that the memory 82 can have a distributed architecture, where various components are situated remote from one another, but can be accessed by the processor 81.

The software in the memory 82 may include one or more separate programs, each of which comprises an ordered listing of executable instructions for implementing logical functions. The software in the memory 82 includes a suitable operating system (O/S) 84, compiler 86, source code 85, and one or more applications 87 in accordance with exemplary embodiments. As illustrated, the application 87 comprises numerous functional components for implementing the features and operations of the exemplary embodiments. The application 87 of the computer 80 may represent various applications, computational units, logic, functional units, processes, operations, virtual entities, and/or modules in accordance with exemplary embodiments, but the application 87 is not meant to be a limitation.

The operating system 84 controls the execution of other computer programs, and provides scheduling, input-output control, file and data management, memory management, and communication control and related services. It is contemplated by the inventors that the application 87 for implementing exemplary embodiments may be applicable on all commercially available operating systems.

Application 87 may be a source program, executable program (object code), script, or any other entity comprising a set of instructions to be performed. When a source program, then the program is usually translated via a compiler (such as the compiler 86), assembler, interpreter, or the like, which may or may not be included within the memory 82, so as to operate properly in connection with the O/S 84. Furthermore, the application 87 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 83 may include input devices such as, for example but not limited to, a mouse, keyboard, scanner, microphone, camera, etc. Furthermore, the I/O devices 83 may also include output devices, for example but not limited to a printer, display, etc. Finally, the I/O devices 83 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 83 also include components for communicating over various networks, such as the Internet or intranet.

If the computer 80 is a PC, workstation, intelligent device or the like, the software in the memory 82 may further include a basic input output system (BIOS) (omitted for simplicity). The BIOS is a set of essential software routines that initialize and test hardware at startup, start the O/S 84, and support the transfer of data among the hardware devices. The BIOS is stored in some type of read-only-memory, such as ROM, PROM, EPROM, EEPROM or the like, so that the BIOS can be executed when the computer 80 is activated.

When the computer 80 is in operation, the processor 81 is configured to execute software stored within the memory 82, to communicate data to and from the memory 82, and to generally control operations of the computer 80 pursuant to the software. The application 87 and the O/S 84 are read, in whole or in part, by the processor 81, perhaps buffered within the processor 81, and then executed.

When the application 87 is implemented in software it should be noted that the application 87 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 87 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed control method(s), may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1A, 1B, 2 , 3 and 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. Oral care apparatus (10) for cleaning teeth of a user, the apparatus comprising:
a light source (14) configured to illuminate the oral cavity of the user with light;
a light sensor (16) unit configured to detect light;
a plurality of cleaning elements (18) for engagement with dental tissue of the user,
wherein the plurality of cleaning elements comprises a first optical waveguide (20) configured, in use, to receive light reflected from a surface of the oral cavity illuminated by the light source and to transmit the received light to the light sensor unit;
a light analysis unit (22) configured to analyze detected light transmitted to the light sensor unit via the first optical waveguide to obtain an analysis result; and
a processor (24) configured to determine a first indication of whether the first optical waveguide is positioned at a tooth surface or gum tissue of the user based on the analysis result.

2. The oral care apparatus of claim 1, wherein the plurality of cleaning elements (18) comprises a second optical waveguide (30) spaced apart from the first optical waveguide (20) and configured, in use, to receive light reflected from a surface of the oral cavity illuminated by the light source and to transmit the received light to the light sensor unit,
wherein the light analysis unit (22) is further configured to analyze detected light transmitted to the light sensor unit (16) via the second optical waveguide to obtain an second analysis result; and
wherein the processor (24) is further configured to determine a second indication of whether the second optical waveguide is positioned at a tooth surface or the gum tissue of the user based on the second analysis result.

3. The personal care device of claim 2, wherein the processor (24) is further configured to identify a surface (21) of the user engaged by the plurality of cleaning elements based on the first and second indications.

4. The personal care device of any of claims 1 to 3, wherein the light analysis unit (22) is configured to analyze the wavelength spectrum of detected light transmitted to the light sensor unit so as to obtain an analysis result.

5. The oral care apparatus of any of claims 2 to 4, wherein the light sensor unit (16) comprises first (16₁) and second (16₂) light sensors, and wherein the first (20) and second (30) optical waveguides are configured, in use, to transmit the received light to the first and second light sensors, respectively.

6. The oral care apparatus of any of claims 1 to 5, wherein the plurality of cleaning elements (18) comprises one or more illumination optical waveguides (45) each configured, in use, to receive light from the light source and to transmit the received light from the light source (14) towards a surface of the oral cavity for illuminating the surface of the oral cavity.

7. The oral care apparatus of any of claims 1 to 6, wherein the light sensor unit (16) comprises an array of light sensors (55),
wherein the plurality of cleaning elements comprises an array of optical waveguides each configured, in use, to receive light reflected from a surface of the oral cavity illuminated by the light source and to transmit the received light to a respective light sensor of the array of light sensors,
wherein the light analysis unit is configured to analyze the detected light transmitted to the array of light sensors via the array of optical waveguides to obtain an array analysis result; and
wherein the processor is configured to determine, for each optical waveguide of the array of optical waveguide, a respective indication of whether the optical waveguide is positioned at a tooth surface or the gum tissue of the user based on the array analysis result.

8. The oral care apparatus of claim 7, wherein the plurality of cleaning elements comprises an array of illumination optical waveguides configured, in use, to receive light from the light source to transmit the received light from the light source towards a surface of the oral cavity for illuminating the surface of the oral cavity.

9. The oral care apparatus of claim 8, wherein the array of illumination optical waveguides is positioned adjacent to or interspaced with the array of optical waveguides.

10. The oral care apparatus of any of claims 7 to 9, wherein the processor is further configured to determine an indication of overlapping of the user's gum tissue by the plurality of cleaning elements based on the array analysis result.

11. The oral care apparatus of any of claim 1 to 10, further comprising:
an output interface configured to output a control signal based on an indication determined by processor,
and optionally wherein the control signal comprises an audible, visual or haptic signal for guiding usage of the apparatus by the user.

12. A toothbrush comprising the oral care apparatus of any of claims 1 to 11.

13. A mouthpiece comprising the oral care apparatus of any of claims 1 to 11.

14. A method for controlling an oral care apparatus, wherein the oral care apparatus comprises: a light source configured to illuminate the oral cavity of a user with light; a light sensor unit configured to detect light; and a plurality of cleaning elements for engagement with dental tissue of the user, wherein the plurality of cleaning elements comprises an optical waveguide, the method comprising:
receiving, at the optical waveguide, light reflected from a surface of the oral cavity illuminated by the light source;
transmitting the received light to the light sensor unit via the optical waveguide;
analyzing detected light transmitted to the light sensor unit via the optical waveguide to obtain an analysis result; and
determining an indication of whether the optical waveguide is positioned at a tooth surface or the gum tissue of the user based on the analysis result.

15. A computer program comprising computer program code means which is adapted, when said computer program is run on a computer, to implement the method claim 14.
